# EUROPEAN PATENT SPECIFICATION

(11) **EP 3 378 665 B1**
(45) Date of publication and mention of the grant of the patent: **23.09.2020**
(21) Application number: 18161553.5
(22) Date of filing: 13.03.2018
(51) Int. Cl.: B41M 5/00, B41J 11/00, C09D 11/101, C09D 11/30, B41M 7/00

(54) **METHOD FOR APPLYING AN IMAGE OF A RADIATION CURABLE INK HAVING A PREDETERMINED GLOSS**
VERFAHREN ZUM AUFBRINGEN EINES BILDES MIT VORBESTIMMTEM GLANZ MITTELS EINER STRAHLUNGSHÄRTBAREN TINTE
PROCÉDÉ D'APPLICATION D'UNE IMAGE AYANT UN BRILLANT PRÉDÉTERMINÉ UTILISANT UNE ENCRE DURCISSABLE PAR RAYONNEMENT

(30) Priority: 20.03.2017 EP 17161920
(43) Date of publication of application: 26.09.2018
(73) Proprietor: Canon Production Printing Holding B.V., 5914 CA Venlo (NL)
(72) Inventor: VAN DE PUT, Marcellus W.P., 5914 CA Venlo (NL); DE KOCK, John B.L., 5914 CA Venlo (NL); BECKERS-VAASEN, Elisabeth H.G., 5914 CA Venlo (NL); SCHUTTEN, Johan, 5914 CA Venlo (NL); VAN HOUT, Richard F.E., 5914 CA Venlo (NL); GOSENS, Mark M.J., 5914 CA Venlo (NL)
(74) Representative: Canon Production Printing IP Department

(56) References cited:
- EP-A1- 2 138 900
- EP-A2- 2 103 440
- EP-A2- 2 111 994
- JP-A- 2006 241 345
- US-A1- 2007 281 245
- US-A1- 2013 222 499

## Description

The present invention relates to a method for applying an image onto a receiving medium using a radiation curable phase change ink. In addition, the invention relates to an ink jet apparatus for applying droplets of a radiation curable ink composition onto a receiving medium. The invention also relates to an ink set comprising a first radiation-curable ink composition and a second radiation-curable ink composition.

### Background of the invention

Methods for applying images onto a receiving medium using a radiation-curable ink are known in the art. Such methods typically include a step of curing the radiation curable ink composition. Curing of the ink composition may be done e.g. by irradiating the newly printed image with a suitable radiation source, such as a UV radiation source. The image obtained may have a certain gloss level. A high gloss level of an image corresponds to a glossy image whereas a low gloss level corresponds to a matt image. The gloss level may be influenced by several parameters, such as curing settings, or nature of the receiving medium, etc. However, it is desired to be able to tune the gloss level of the image in a flexible way.

EP 2138900, JP 2006 241345, EP 2103440, EP 2111994 and US 2013/222499 relate to gloss control in an inkjet printing process. US 2007/281245 relates to inkjet printing inks.

US 8,105,659 discloses a method for applying an image onto a receiving medium using a UV curable ink, wherein the gloss of the image obtained is controlled by controlling an amount of oxygen in the air. However, this method requires control of the atmosphere around the printed image, and thus requires a complicated set up for applying the image.

Therefore, it is an object of the present invention to provide a method that mitigates the problem of the prior art. It is an object of the present invention to provide a method for applying an image onto a recording medium using a radiation curable ink, wherein the gloss of the image obtained can be suitably regulated.

### Summary of the invention

The object is achieved in a method for forming an image having a predetermined gloss, the method providing the steps of:
**a.** Selecting a gloss level;
**b.** Selecting a radiation-curable ink composition, based on the selected gloss level wherein the radiation-curable ink composition is selected from an ink set comprising a first radiation-curable ink composition and a second radiation-curable ink composition, wherein the first radiation-curable ink composition comprises a first amount of an acrylate compound and a first amount of a methacrylate monomer, wherein the second radiation-curable ink composition comprises a second amount of an acrylate compound and a second amount of a methacrylate monomer, wherein the first amount of acrylate compound is higher than the second amount of acrylate compound, and wherein the first amount of methacrylate compound is lower than the second amount of methacrylate compound;
**c.** Applying the radiation-curable ink composition onto a recording medium, thereby forming the image;
**d.** Curing the radiation-curable ink composition applied onto the recording medium.

In the method according to the present invention, an image may be formed onto a recording medium. The recording medium may be a substrate suitable for forming an image, for example a sheet of paper, textile, a non-absorbing medium, etc. The image may have a predetermined gloss level. The gloss level may be low. Images having a low gloss level are also referred to as matt images. Images having a high gloss are also referred to as glossy images. Images having an intermediate gloss are also referred to as semi-gloss images. The gloss of an image may be expressed in gloss units (GU). In step **a.,** a gloss level is selected.

In step **b.,** a radiation-curable ink composition is selected, based on the selected gloss level. The radiation-curable ink composition comprises an acrylate compound and a methacrylate compound. Both acrylate and methacrylate compound are radiation-curable and can be polymerized upon irradiation with UV radiation. It has been surprisingly found that the gloss of an image can be suitably tuned by changing the ratio between an acrylate compound and a methacrylate compound in the ink composition. It was found that ink composition rich in acrylate components provide matt images, whereas ink compositions rich in methacrylate components provide gloss images. By suitably selecting the ratio between acrylate components and methacrylate components in an ink composition, the gloss of the resulting image can be tuned. Ink compositions may comprise both acrylate components and methacrylates. Alternatively, an ink composition may comprise only one of acrylate components and methacrylate components. An ink composition comprising only acrylate components, and no methacrylate components, may provide matt images. An ink composition comprising only methacrylate components and no acrylate components, will provide gloss images. Ink compositions comprising both acrylate components and methacrylate components may provide images having a gloss level in between. Thus, by suitably selecting the ratio between acrylate components and methacrylate components, the gloss of an image can be tuned.

Acrylate components and methacrylate components suitable for use in a radiation-curable ink composition are known in the art. The acrylate components may be mono-functional acrylates, di-functional acrylates, tri-functional acrylates or multi-functional (i.e. comprising more than three acrylate functional groups) acrylates. Likewise, the methacrylate components may be mono-functional methacrylates, di-functional methacrylates, tri-functional methacrylates or multi-functional (i.e. comprising more than three acrylate functional groups) methacrylates.

The ink in accordance with the present invention is a radiation curable ink. Radiation curable inks are known in the art. Radiation curable inks are inks that comprise at least one radiation curable component. The radiation curable component may be curable upon irradiation of the ink, for example using UV radiation. Curing of the ink is also known in the art as hardening of the ink. Radiation curable components may be e.g. radiation curable monomers and/or oligomers. Non-limiting examples of radiation curable monomers are acrylate monomers, methacrylate monomers and epoxy monomers. The monomers may be monofunctional monomers (i.e. monomers comprising one radiation curable moiety), or the monomers may be multifunctional monomers (i.e. monomers comprising two or more radiation curable moieties).

The radiation curable ink composition may additionally comprise at least one photo-initiator for initiating curing (e.g. initiating a polymerization reaction) upon curing of the ink composition. The radiation curable ink composition may additionally comprise at least one inhibitor for preventing polymerization of the curable components of the ink. When the desired gloss level is selected, a suitable radiation-curable ink composition may be selected using a relation between the gloss level and the radiation-curable ink composition. Said relation may be implemented in a controller in any form, for example in the form of a database of actual gloss measurements versus radiation-curable ink composition (e.g. a look-up table), in the form of an algorithm based on theoretical calculations, a combination of both or any other form.

The radiation curable ink composition may further comprise a colorant. The colorant may be a pigment, a mixture of pigments, a dye, a mixture of dyes, a mixture of a dye and a pigment or a mixture of more than one dye and more than one pigment. Pigments are preferred, because of their superior color fastness with respect to dyes.

In step c., the radiation-curable ink composition is applied onto a recording medium, thereby forming the image. Preferably, the radiation-curable ink composition may be applied using an ink jet recording apparatus. In an inkjet printer, the ink composition may be applied onto the medium by ejecting droplets of the ink onto the medium. The droplets are applied into a predetermined pattern, thereby forming an image.

In step **d.,** the radiation-curable ink composition applied onto the recording medium is cured. Curing of the ink may be performed using suitable curing means. For radiation-curable ink, the preferred curing means is a source of radiation, for example a source of UV radiation. Suitable sources of UV radiation are for example UV LEDS, HG lamps, etc. By irradiating the radiation-curable ink composition, a polymerization reaction may take place in the ink, thereby forming a robust layer on top of the recording medium. The cured image may show the selected level of gloss.

In an embodiment, the radiation-curable ink composition is applied onto the recording medium using an ink jet print head. Inkjet print heads can be suitably used to eject droplets of the radiation-curable ink composition onto the recording medium. The type of ink jet print head is not limited, but may be for example a piezo-electric ink jet print head or a thermal ink jet print head.

In an embodiment, in between steps **b.** and **c.** an ink composition is prepared by mixing the first radiation-curable ink composition and the second radiation-curable ink composition, thereby forming a third radiation-curable ink composition.

Two radiation-curable ink compositions may be provided. The first radiation-curable ink composition may be rich in acrylate components and poor in methacrylate components. Optionally, the first stock solution may be essentially free of methacrylate components. The second radiation-curable ink composition may be rich in methacrylate components and poor in acrylate components. Optionally, the second stock solution may be essentially free of acrylate components. Both the first and second stock solution may comprise a colorant, such as a pigment. When both the first and second stock solution comprise a colorant, then the gloss of an image may be suitably tuned by mixing the first and second stock solution without changing the optical density (OD) of an image). Alternatively, only one of the first and second radiation-curable ink compositions may comprise a colorant. In case different colors of ink are used, the number of ink compositions required is less if only one of the first and second stock solutions comprises a colorant.

The first and second radiation-curable ink composition may be mixed based on the desired gloss level of the image to be printed. The first radiation-curable ink composition may be stored in a first reservoir. The second radiation-curable ink composition may be stored in a second reservoir. Both the first and second reservoir may be connected to a sub reservoir. The first and second reservoir may be connected to the sub reservoir via suitable tubing. In between the first reservoir and the sub-reservoir, a valve may be provided, to control the amount of first stock solution that is provided from the first reservoir to the sub-reservoir. Analogously, in between the second reservoir and the sub reservoir a valve may be provided, to control the amount of second stock solution that is provided from the second reservoir to the sub-reservoir.

In an aspect of the invention, an ink set is provided, the ink set comprising a first radiation-curable ink composition and a second radiation-curable ink composition, wherein the first radiation-curable ink composition comprises a first amount of an acrylate compound and a first amount of a methacrylate monomer, wherein the second radiation-curable ink composition comprises a second amount of an acrylate compound and a second amount of a methacrylate monomer, wherein the first amount of acrylate compound is higher than the second amount of acrylate compound, and wherein the first amount of methacrylate compound is lower than the second amount of methacrylate compound.

By selecting the ink composition from the ink set, an image having a predetermined gloss level may be provided onto a recording medium.

In a further aspect of the invention, an ink jet apparatus for applying droplets of a radiation-curable ink composition onto a recording medium is provided, the ink jet apparatus comprising:
**a.** a print head for jetting droplets of the radiation-curable ink composition;
**b.** liquid supply means for supplying the radiation-curable ink composition to the print head;
**c.** holding means for holding the recording medium during a printing operation;
**d.** curing means for curing the radiation-curable ink composition;
**e.** retrieving means for retrieving a desired gloss level of an image to be printed;
**f.** control means for controlling the print head, and an ink supply in accordance with the desired gloss and in accordance with the method according to claim 1.

The ink jet apparatus comprises a print head. The print head may be an ink jet print head, such as a piezo electric print head or a thermal print head. The print head may jet droplets of the radiation-curable ink composition onto the recording medium during printing, thereby forming an image onto the recording medium.

The ink jet apparatus comprises liquid supply means for supplying the radiation-curable ink composition to the print head. The liquid supply means may comprise a reservoir for storing ink and/or tubing for transporting ink.

The ink jet apparatus further comprises holding means for holding the recording medium during the printing operation. By holding the recording medium, the position of the recording medium may be fixed, thereby allowing to accurately position the droplets onto the recording medium. The holding means may comprise a supporting structure for holding the medium, such as a support table. The holding means may further comprise vacuum means for providing an underpressure between the recording medium and the support structure. Optionally, the holding means may comprise means for advancing the recording medium.

The ink jet apparatus further comprises curing means for curing the ink applied onto the recording medium. The curing means may be a suitable source of electromagnetic radiation, preferably UV radiation. The source of radiation may be a lamp, such as a UV LED lamp of a mercury lamp. The radiation provided by the curing means may bring about a polymerization reaction in the ink composition, thereby hardening the ink layer to obtain a robust image on the recording medium.

The ink jet apparatus further comprises retrieving means for retrieving a desired gloss level of an image to be printed. The desired gloss level may be selected by a user of the printer. For example, the user may provide the desired gloss level via a user interface of the printer, or on a computer that is connected to the printer via a network. The retrieving means may retrieve the data provided by the user and communicate this data to control means of the printer.

The control means of the ink jet apparatus may further control the ink supply and the print head. For example, the control means may control which of the ink from the ink set is supplied to the print head to print an image onto the recording medium. When stock solution are used to prepare ink compositions, the control means may control the supply of a first stock solution and a second stock solution to a sub reservoir, wherein the stock solutions are mixed before being supplied to the print head.

### Brief Description of the Drawings

The present invention will become more fully understood from the detailed description given hereinbelow and the accompanying schematical drawings which are given by way of illustration only, and thus are not limitative of the present invention, and wherein:
- Fig. 1A: is a perspective view of a first exemplary scanning inkjet printing apparatus;
- Fig. 1B: is a schematic representation of a scanning inkjet printing assembly;
- Fig. 1C: is a perspective view of a second exemplary scanning inkjet printing apparatus;
- Fig. 2: shows a first exemplary ink supply system
- Fig. 3: shows a second exemplary ink supply system

### Detailed description of the Drawings

The present invention will now be described with reference to the accompanying drawings, wherein the same reference numerals have been used to identify the same or similar elements throughout the several views.

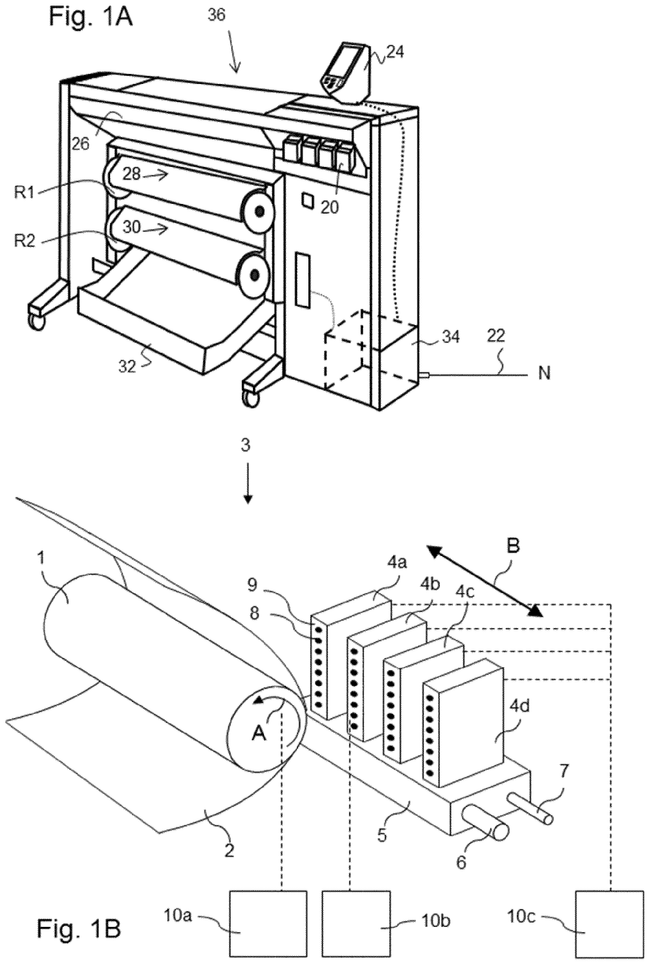

Fig. 1A shows an image forming apparatus 36, wherein printing is achieved using a wide format inkjet printer. The wide-format image forming apparatus 36 comprises a housing 26, wherein the printing assembly, for example the ink jet printing assembly shown in Fig. 1B is arranged. The image forming apparatus 36 also comprises a storage means for storing image receiving member 28, 30, a delivery station to collect the image receiving member 28, 30 after printing and storage means for marking material 20. In Fig. 1A, the delivery station is embodied as a delivery tray 32. Optionally, the delivery station may comprise processing means for processing the image receiving member 28, 30 after printing, e.g. a folder or a puncher. The wide-format image forming apparatus 36 furthermore comprises means for receiving print jobs and optionally means for manipulating print jobs. These means may include a user interface unit 24 and/or a control unit 34, for example a computer.

Images are printed on an image receiving member, for example paper, supplied by a roll 28, 30. The roll 28 is supported on the roll support R1, while the roll 30 is supported on the roll support R2. Alternatively, cut sheet image receiving members may be used instead of rolls 28, 30 of image receiving member. Printed sheets of the image receiving member, cut off from the roll 28, 30, are deposited in the delivery tray 32.

Each one of the marking materials for use in the printing assembly are stored an ink supply system 20 arranged in fluid connection with the respective print heads for supplying marking material to said print heads.

The local user interface unit 24 is integrated to the print engine and may comprise a display unit and a control panel. Alternatively, the control panel may be integrated in the display unit, for example in the form of a touch-screen control panel. The local user interface unit 24 is connected to a control unit 34 placed inside the printing apparatus 36. The control unit 34, for example a computer, comprises a processor adapted to issue commands to the print engine, for example for controlling the print process. The image forming apparatus 36 may optionally be connected to a network N. The connection to the network N is diagrammatically shown in the form of a cable 22, but nevertheless, the connection could be wireless. The image forming apparatus 36 may receive printing jobs via the network. Further, optionally, the controller of the printer may be provided with a USB port, so printing jobs may be sent to the printer via this USB port.

Fig. 1B shows an ink jet printing assembly 3. The ink jet printing assembly 3 comprises supporting means for supporting an image receiving member 2. The supporting means are shown in Fig. 1B as a platen 1, but alternatively, the supporting means may be a flat surface. The platen 1, as depicted in Fig. 1B, is a rotatable drum, which is rotatable about its axis as indicated by arrow A. The supporting means may be optionally provided with suction holes for holding the image receiving member in a fixed position with respect to the supporting means. The ink jet printing assembly 3 comprises print heads 4a - 4d, mounted on a scanning print head carriage 5. The scanning print head carriage 5 is guided by suitable guiding means 6, 7 to move in reciprocation in the main scanning direction B. Each print head 4a - 4d comprises an orifice surface 9, which orifice surface 9 is provided with at least one orifice 8. The print heads 4a - 4d are configured to eject droplets of marking material onto the image receiving member 2. The platen 1, the carriage 5 and the print heads 4a - 4d are controlled by suitable controlling means 10a, 10b and 10c, respectively.

The image receiving member 2 may be a medium in web or in sheet form and may be composed of e.g. paper, cardboard, label stock, coated paper, plastic or textile. Alternatively, the image receiving member 2 may also be an intermediate member, endless or not. Examples of endless members, which may be moved cyclically, are a belt or a drum. The image receiving member 2 is moved in the sub-scanning direction A by the platen 1 along four print heads 4a - 4d provided with a fluid marking material. The scanning print head carriage 5 carries the four print heads 4a - 4d and may be moved in reciprocation in the main scanning direction B parallel to the platen 1, such as to enable scanning of the image receiving member 2 in the main scanning direction B. Only four print heads 4a - 4d are depicted for demonstrating the invention. In practice an arbitrary number of print heads may be employed. In any case, at least one print head 4a - 4d per color of marking material is placed on the scanning print head carriage 5. For example, for a black-and-white printer, at least one print head 4a - 4d, usually containing black marking material is present. Alternatively, a black-and-white printer may comprise a white marking material, which is to be applied on a black image-receiving member 2. For a full-color printer, containing multiple colors, at least one print head 4a - 4d for each of the colors, usually black, cyan, magenta and yellow is present. Often, in a full-color printer, black marking material is used more frequently in comparison to differently colored marking material. Therefore, more print heads 4a - 4d containing black marking material may be provided on the scanning print head carriage 5 compared to print heads 4a - 4d containing marking material in any of the other colors. Alternatively, the print head 4a - 4d containing black marking material may be larger than any of the print heads 4a - 4d, containing a differently colored marking material. The print head carriage 5 is guided by guiding means 6, 7. These guiding means 6, 7 may be rods as depicted in Fig. 1B. The rods may be driven by suitable driving means (not shown). Alternatively, the print head carriage 5 may be guided by other guiding means, such as an arm being able to move the print head carriage 5. Another alternative is to move the image receiving material 2 in the main scanning direction B. Each print head 4a - 4d comprises an orifice surface 9 having at least one orifice 8, in fluid communication with a pressure chamber containing fluid marking material provided in the print head 4a - 4d. On the orifice surface 9, a number of orifices 8 is arranged in a single linear array parallel to the sub-scanning direction A. Eight orifices 8 per print head 4a - 4d are depicted in Fig. 1B, however obviously in a practical embodiment several hundreds of orifices 8 may be provided per print head 4a - 4d, optionally arranged in multiple arrays. As depicted in Fig. 1B, the respective print heads 4a - 4d are placed parallel to each other such that corresponding orifices 8 of the respective print heads 4a - 4d are positioned in-line in the main scanning direction B. This means that a line of image dots in the main scanning direction B may be formed by selectively activating up to four orifices 8, each of them being part of a different print head 4a - 4d. This parallel positioning of the print heads 4a - 4d with corresponding in-line placement of the orifices 8 is advantageous to increase productivity and/or improve print quality. Alternatively multiple print heads 4a - 4d may be placed on the print carriage adjacent to each other such that the orifices 8 of the respective print heads 4a - 4d are positioned in a staggered configuration instead of in-line. For instance, this may be done to increase the print resolution or to enlarge the effective print area, which may be addressed in a single scan in the main scanning direction. The image dots are formed by ejecting droplets of marking material from the orifices 8.

Upon ejection of the marking material, some marking material may be spilled and stay on the orifice surface 9 of the print head 4a - 4d. The ink present on the orifice surface 9, may negatively influence the ejection of droplets and the placement of these droplets on the image receiving member 2. Therefore, it may be advantageous to remove excess of ink from the orifice surface 9. The excess of ink may be removed for example by wiping with a wiper and/or by application of a suitable anti-wetting property of the surface, e.g. provided by a coating.

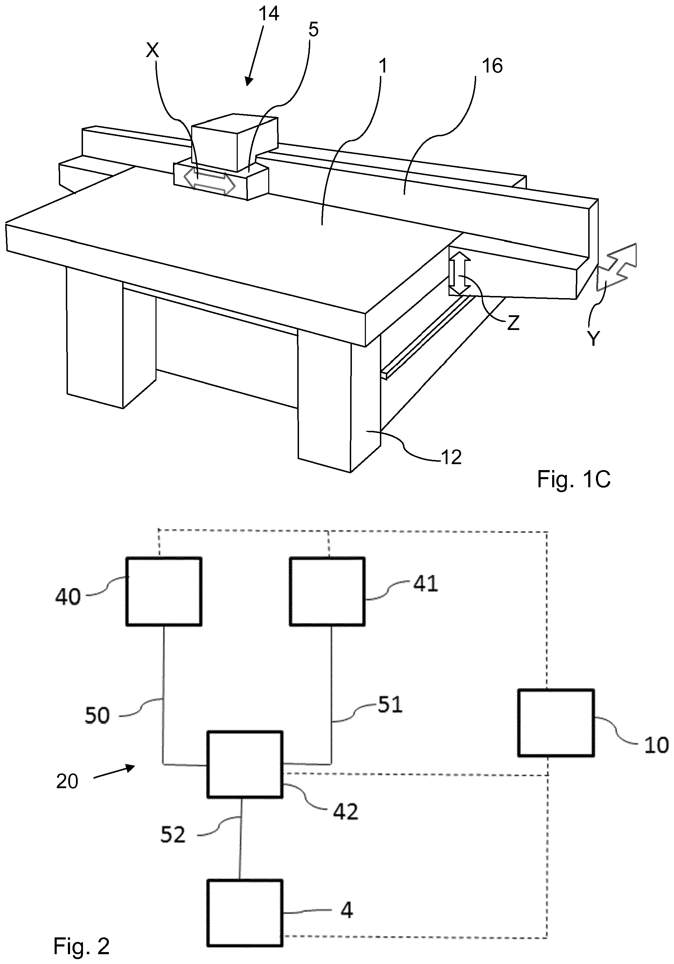

Fig. 1C shows another embodiment of an image forming apparatus 14 (herein also referred to as a printing apparatus), in which the medium supporting means 1 is a flat surface. On the flat surface a non-flexible flat medium may be arranged and may be printed on. The medium supporting means 1 is supported on a suitable support structure 12 and a carriage guiding assembly 16 is arranged over the medium supporting means 1. Such carriage guiding assembly 16 is also known in the art as a gantry. The carriage guiding assembly supports the print head carriage 5 such that the print head carriage 5 is enabled to scan in an X-direction. The carriage guiding assembly 16 is arranged and configured to be enabled to reciprocate in a Y-direction, wherein the Y-direction is usually substantially perpendicular to the X-direction. In a known printing apparatus 14, the carriage guiding assembly 16 is also arranged and configured to be enabled to move in a Z-direction, which is substantially perpendicular to the X-direction and the Y-direction such to enable to adapt the printing apparatus 14 to a thickness of the recording medium being arranged on the medium supporting surface 1.

Fig. 2 shows a first exemplary ink supply system 20 that can be used in an ink jet printing apparatus in accordance with the present invention. The ink supply system 20 comprises a first ink reservoir 40 configured to contain a first stock solution. The first stock solution may be e.g. an ink composition comprising at least a colorant, a photo-initiator and an acrylate compound. The ink supply system 20 further comprises a second reservoir 41. The second reservoir 41 is configured to in operation comprise a second stock solution. The second stock solution may be e.g. an ink composition comprising at least a colorant, a photo-initiator and a methacrylate compound. The ink supply system 20 further comprises a sub-reservoir 42. Both the first reservoir 40 and the second reservoir 42 are in communication with the sub-reservoir 42. The first reservoir 40 is connected to the sub-reservoir 42 via a first connection 50. The first connection 50 may be a pipe or tube. Preferably, the first connection 50 comprises a flow regulator, such as a valve (not shown). The second reservoir 41 is connected to the sub-reservoir 42 via a second connection 51. The second connection 51 may be a pipe or tube. Preferably, the second connection 51 comprises a flow regulator, such as a valve (not shown). In the sub-reservoir 42, the first stock solution and the second stock solution may be mixed, thereby arriving at an ink composition comprising a desired acrylate/methacrylate ratio. Preferably, the sub-reservoir 42 may be provided with stirring means (not shown). The ink present in the sub-reservoir 42 may be supplied to the print head 4. The sub-reservoir 42 is in communication with the print head 4 via the ink supply 52. The first reservoir 40, the second reservoir 41, the sub-reservoir 42 and the print head 4 are in communication with the control unit 10. The control unit controls the supply of the first reservoir 40 to the sub-reservoir 42, the supply from the second reservoir 41 to the sub-reservoir 42 and the supply from the sub-reservoir 42 to the print head 4.

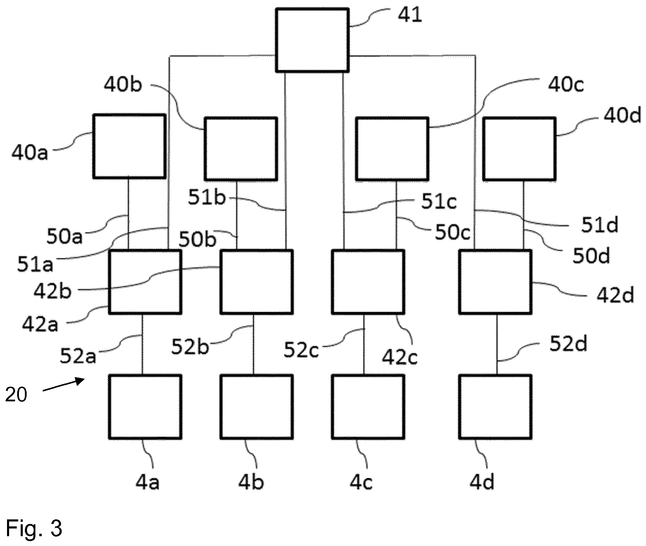

Fig. 3 shows a second exemplary ink supply system 20 that can be used in an ink jet printing apparatus in accordance with the present invention. The ink supply system 20 comprises four first ink reservoirs 40a, 40b, 40c, 40d configured to contain a first stock solution. The first stock solution may be e.g. an ink composition comprising at least a colorant, a photo-initiator and an acrylate compound. Each one of the four first reservoirs 40a, 40b, 40c, 40d comprises a different color of the first stock solution. For example, the first reservoir 40a may comprise a yellow first stock solution, the reservoir 40b may comprise the cyan first stock solution, the reservoir 40c may comprise the magenta first stock solution and the reservoir 40d may comprise the black first stock solution. The ink supply system 20 further comprises a second reservoir 41. The second reservoir 41 is configured to in operation comprise a second stock solution. The second stock solution may be e.g. an ink composition comprising a photo-initiator and a methacrylate compound. The second stock solution may be free of colorant. Each one of the first reservoirs 40a, 40b, 40c, 40d is connected to a sub-reservoir 42. Reservoir 40a is connected to sub-reservoir 42a via connection 50a, reservoir 40b is connected to sub-reservoir 42b via connection 50b, reservoir 40c is connected to sub-reservoir 42c via connection 50c and reservoir 40d is connected to sub-reservoir 42d via connection 50d.The connections 50a, 50b, 50c, 50d may be a pipe or tube. Preferably, the connections 50a, 50b, 50c, 50d comprise a flow regulator, such as a valve (not shown). The second reservoir 41 is connected to each of the sub-reservoirs 42a, 42b, 42c, 42d via a second connection 51. The second reservoir 41 is connected to sub-reservoir 42a via connection 51a, the second reservoir 41 is connected to sub-reservoir 42b via connection 51b, the second reservoir 41 is connected to sub-reservoir 42c via connection 51c, the second reservoir 41 is connected to sub-reservoir 42d via connection 51d. The connections 51a, 51b, 51c, 51d may be pipes or tubes. Preferably, the second connections 51a, 51b, 51c, 51d comprise a flow regulator, such as a valve (not shown). In the sub-reservoir 42, the first stock solution and the second stock solution may be mixed, thereby arriving at an ink composition comprising a desired acrylate/methacrylate ratio. Preferably, the sub-reservoirs 42a, 42b, 42c, 42d may be provided with stirring means (not shown). The ink present in the sub-reservoir 42a, 42b, 42c, 42d may be supplied to the print heads 4a, 4b, 4c, 4d. The sub-reservoir 42a is in communication with the print head 4a via the ink supply 52a, the sub-reservoir 42b is in communication with the print head 4b via the ink supply 52b, the sub-reservoir 42c is in communication with the print head 4c via the ink supply 52c and the sub-reservoir 42d is in communication with the print head 4d via the ink supply 52d. The first reservoirs 40a, 40b, 40c, 40d, the second reservoirs 41a, 41b, 41c, 41d, the sub-reservoirs 42a, 42b, 42c, 42d and the print heads 4a, 4b, 4c, 4d are in communication with the control unit 10. The control unit controls the supply of the first reservoirs 40a, 40b, 40c, 40d to the sub-reservoirs 42a, 42b, 42c, 42d, the supply from the second reservoir 41a, 41b, 41c, 41d to the sub-reservoirs 42a, 42b, 42c, 42d and the supply from the sub-reservoirs 42a, 42b, 42c, 42d to the print heads 4a, 4b, 4c, 4d.

### Experiments and examples

### Materials

SR 9003 (propoxylated neopentyl glycol diacrylate), SR355 (ditrimethylolpropane tetraacrylate) and SR 217 (a cycloaliphatic acrylate monomer) were obtained from Sartomer. Genomer 5161, Irgacure 379 and 2-isopropylthioxanthone were obtained from Rahn. 2-Hydroxyethylmetacrylate (HEMA) and ethyl dimethylamino benzoate were obtained from Sigma-Aldrich. Cyan pigment was obtained from Sun.

All chemicals were used as received.

### Methods

### Image formation

Images were formed by applying ink onto a recording medium (MPI 2000 form Avery dennison) using an Océ Arizona 550 GT printer in the quality mode print mode. The printer was provided with Air cooled Phoseon FireJet 200 lamps having a window of 20 x 150 mm, a maximum output of 8W/cm² and a main wave length of 395 nm. Two lamps were provided on the print head carriage. The window of the lamp was placed 15 mm above the surface of the recording medium. The longitudinal axis of the lamp was perpendicular to the scanning direction of the print head carriage.

### Gloss

The gloss of an image was measured after the ink-layer (14 µm) was cured. The gloss was measured using a micro-TRI glossmeter obtained from BYK-Gardner GmbH using the internal calibration and measurement method. The micro-TRI gloss measuring device simultaneously measures the gloss under an angle of 20°, 60° and 85°, respectively. The gloss level reported is the gloss level measured under an angle of 60°.

### Ink composition

A monomer mixture was prepared by putting together 57 grams of SR9003®, 7 grams of SR355®, 28 gram of SR217® and 8 grams of HEMA, and mixing the components. This yielded monomer mixture 1. Monomer mixture 1 comprises 92 wt% of acrylate components and 8 wt% of methacrylate components. Two other monomer mixtures (monomer mixture **2** and monomer mixture **3**) were prepared analogously. However, different relative amounts of the ingredients were used, as is shown in table 1. SR9003, SR355 and SR217 are acrylate components; HEMA is a methacrylate component.

**Table 1: Monomer mixtures**

| Monomer mixture | SR 9003 (wt%) | SR355 wt% | SR217 (wt%) | HEMA (wt%) |
|---|---|---|---|---|
| **1** | 57 | 7 | 28 | 8 |
| **2** | 59 | 8 | 29 | 4 |
| **3** | 47 | 8 | 43 | 2 |

An ink precursor was prepared by putting together 60 grams of Genomer 5161, 30 grams of Irgacure 379, 50 grams of 2-isopropylthioxanthone and 40 grams of ethyl dimethylamino benzoate and 20 grams of pigment.

Ink composition **1** was prepared by mixing 19 grams of the ink precursor and 81 grams of monomer mixture **1.** Ink composition **2** was prepared by mixing 19 grams of the ink precursor and 81 grams of monomer mixture **2.** Ink composition **3** was prepared by mixing 19 grams of the ink precursor and 81 grams of monomer mixture **3.**

Prints were made using the 3 ink compositions **1, 2, 3** and the gloss of the resulting prints was measured. The results are shown in table 2.

**Table 2: gloss measurements**

| Ink composition | Gloss |
|---|---|
| **1** | 5 |
| **2** | 10 |
| **3** | 25 |

The results presented in table 2 show a relation between the acrylate / methacrylate ratio in the ink composition and the gloss of a print made with such ink composition. A print made using ink composition **1,** which has a acrylate/methacrylate ratio of 11.5 has a gloss of 5 GU. A print made using ink composition **2,** which has a acrylate/methacrylate ratio of 24 has a gloss of 10 GU and a print made using ink composition **3,** which has a acrylate/methacrylate ratio of 49 has a gloss of 25 GU. Thus, ink compositions that have a lower acrylate/methacrylate ratio show low gloss, whereas ink compositions that have a higher acrylate/methacrylate ratio show higher gloss. Thus, the gloss level of a print can be adjusted by suitably adjusting the acrylate/methacrylate ratio of the ink composition.

## Claims

1. Method for forming an image having a predetermined gloss, the method providing the steps of :
**a.** Selecting a gloss level;
**b.** Selecting a radiation-curable ink composition;
**c.** Applying the radiation-curable ink composition onto a recording medium, thereby forming the image ;
**d.** Curing the radiation-curable ink composition applied onto the recording medium,
**characterized In that** in step **b,** the radiation-curable ink composition is selected based on the selected gloss level, wherein the radiation-curable ink composition is selected from an ink set comprising a first radiation-curable ink composition and a second radiation-curable ink composition, wherein the first radiation-curable ink composition comprises a first amount of an acrylate compound and a first amount of a methacrylate monomer, wherein the second radiation-curable ink composition comprises a second amount of an acrylate compound and a second amount of a methacrylate monomer, wherein the first amount of acrylate compound is higher than the second amount of acrylate compound, and wherein the first amount of methacrylate compound is lower than the second amount of methacrylate compound.

2. Method according to claim 1, wherein the radiation-curable ink composition is applied onto the recording medium using an ink jet print head.

3. Method according to any of the preceding claims, wherein in between steps **b.** and **c.** an ink composition is prepared by mixing the first radiation-curable ink composition and the second radiation-curable ink composition, thereby forming a third radiation-curable ink composition.

4. Ink set comprising a first radiation-curable ink composition and a second radiation-curable ink composition, **characterized in that** the first radiation-curable ink composition comprises a first amount of an acrylate compound and a first amount of a methacrylate monomer, wherein the second radiation-curable ink composition comprises a second amount of an acrylate compound and a second amount of a methacrylate monomer, wherein the first amount of acrylate compound is higher than the second amount of acrylate compound, and wherein the first amount of methacrylate compound is lower than the second amount of methacrylate compound.

5. Ink jet apparatus for applying droplets of a radiation-curable ink composition onto a recording medium, the ink jet apparatus comprising:
**a.** a print head for jetting droplets of the radiation-curable ink composition;
**b.** liquid supply means for supplying the radiation-curable ink composition to the print head;
**c.** holding means for holding the recording medium during a printing operation;
**d.** curing means for curing the radiation-curable ink composition;
**e.** retrieving means for retrieving a desired gloss level of an image to be printed;
**f. characterized in that** the ink jet apparatus further comprises control means for controlling the print head, and an ink supply in accordance with the desired gloss and in accordance with the method according to claim 1.

## Patentansprüche

1. Verfahren zur Herstellung eines Bildes, das einen vorbestimmten Glanz aufweist, welches Verfahren die folgenden Schritte umfasst:
a. auswählen eines Glanzniveaus;
b. auswählen einer strahlungshärtbaren Tintenzusammensetzung;
c. aufbringen der strahlungshärtbaren Tintenzusammensetzung auf ein Aufzeichnungsmedium, um dadurch das Bild herzustellen;
d. aushärten der strahlungshärtbaren Tintenzusammensetzung, die auf das Aufzeichnungsmedium aufgebracht wurde,
**dadurch gekennzeichnet, dass** in Schritt b. die strahlungshärtbare Tintenzusammensetzung ausgewählt wird auf der Grundlage des ausgewählten Glanzniveaus, wobei die strahlungshärtbare Tintenzusammensetzung ausgewählt ist aus einem Tintenset, das eine erste strahlungshärtbare Tintenzusammensetzung und eine zweite strahlungshärtbare Tintenzusammensetzung umfasst, wobei die erste strahlungshärtbare Tintenzusammensetzung eine erste Menge einer Acrylatverbindung und eine erste Menge eines Methacrylat-Monomers enthält, wobei die zweite strahlungshärtbare Tintenzusammensetzung eine zweite Menge einer Acrylatverbindung und eine zweite Menge eines Methacrylat-Monomers enthält, wobei die erste Menge der Acrylatverbindung größer ist als die zweite Menge der Acrylatverbindung und wobei die erste Menge der Methacrylatverbindung kleiner ist als die zweite Menge der Methadrylatverbindung.

2. Verfahren nach Anspruch 1, bei dem die strahlungshärtbare Tintenzusammensetzung mit Hilfe eines Tintenstrahldruckkopfes auf das Aufzeichnungsmedium aufgebracht wird.

3. Verfahren nach einem der vorstehenden Ansprüche, bei dem zwischen den Schritten b. und c. eine Tintenzusammensetzung zubereitet wird durch Mischen der ersten strahlungshärtbaren Tintenzusammensetzung und der zweiten strahlungshärtbaren Tintenzusammensetzung, um dadurch eine dritte strahlungshärtbare Tintenzusammensetzung zu bilden.

4. Tintenset mit einer ersten strahlungshärtbaren Tintenzusammensetzung und einer zweiten strahlungshärtbaren Tintenzusammensetzung, **dadurch gekennzeichnet, dass** die erste strahlungshärtbare Tintenzusammensetzung ein erste Menge einer Acrylatverbindung und eine erste Menge eines Methacylat-Monomers enthält, wobei die zweite strahlungshärtbare Tintenzusammensetzung eine zweite Menge einer Acrylatverbindung und eine zweite Menge eines Methacrylat-Monomers enthält, wobei die erste Menge der Acrylatverbindung größer ist als die zweite Menge der Acrylatverbindung und wobei die erste Menge der Methacrylatverbindung kleiner ist als die zweite Menge der Methacrylatverbindung.

5. Tintenstrahlvorrichtung zum Aufbringen von Tröpfchen einer strahlungshärtbaren Tintenzusammensetzung auf ein Aufzeichnungsmedium, welche Tintenstrahlvorrichtung aufweist:
a. einen Druckkopf zum Ausstoßen von Tröpfchen der strahlungshärtbaren Tintenzusammensetzung;
b. eine Tintenzufuhreinrichtung zum Zuführen der strahlungshärtbaren Tintenzusammensetzung zu dem Druckkopf;
c. eine Halteeinrichtung zum Halten des Aufzeichnungsmediums während eines Druckvorgangs;
d. eine Härtungseinrichtung zum Aushärten der strahlungshärtbaren Tintenzusammensetzung;
e. eine Abrufeinrichtung zum Abrufen eines gewünschten Glanzniveaus eines zu druckenden Bildes;
f. **dadurch gekennzeichnet, dass** die Tintenstrahlvorrichtung weiterhin eine Steuereinrichtung zur Steuerung des Druckkopfes und einer Tintenzufuhr in Übereinstimmung mit dem gewünschten Glanz und in Übereinstimmung mit dem Verfahren nach Anspruch 1 aufweist.

## Revendications

1. Procédé pour former une image ayant un brillant prédéterminé, le procédé prévoyant les étapes consistant à :
**a.** sélectionner un niveau de brillant ;
**b.** sélectionner une composition d'encre durcissable par rayonnement ;
**c.** appliquer la composition d'encre durcissable par rayonnement sur un support d'enregistrement, pour ainsi former l'image ;
**d.** durcir la composition d'encre durcissable par rayonnement appliquée sur le support d'enregistrement,
**caractérisé en ce qu'**à l'étape **b,** la composition d'encre durcissable par rayonnement est sélectionnée sur la base du niveau de brillant sélectionné, dans lequel la composition d'encre durcissable par rayonnement est sélectionnée parmi un ensemble d'encres comprenant une première composition d'encre durcissable par rayonnement et une deuxième composition d'encre durcissable par rayonnement, dans lequel la première composition d'encre durcissable par rayonnement comprend une première quantité d'un composé acrylate et une première quantité d'un monomère de méthacrylate, dans lequel la deuxième composition d'encre durcissable par rayonnement comprend une seconde quantité d'un composé acrylate et une seconde quantité d'un monomère de méthacrylate, dans lequel la première quantité de composé acrylate est supérieure à la seconde quantité de composé acrylate, et dans lequel la première quantité de composé méthacrylate est inférieure à la seconde quantité de composé méthacrylate.

2. Procédé selon la revendication 1, dans lequel la composition d'encre durcissable par rayonnement est appliquée sur le support d'enregistrement à l'aide d'une tête d'impression à jet d'encre.

3. Procédé selon l'une quelconque des revendications précédentes, dans lequel entre les étapes **b.** et **c.** une composition d'encre est préparée par mélange de la première composition d'encre durcissable par rayonnement et de la deuxième composition d'encre durcissable par rayonnement, pour ainsi former une troisième composition d'encre durcissable par rayonnement.

4. Ensemble d'encres comprenant une première composition d'encre durcissable par rayonnement et une deuxième composition d'encre durcissable par rayonnement, **caractérisé en ce que** la première composition d'encre durcissable par rayonnement comprend une première quantité d'un composé acrylate et une première quantité d'un monomère de méthacrylate, dans lequel la deuxième composition d'encre durcissable par rayonnement comprend une seconde quantité d'un composé acrylate et une seconde quantité d'un monomère de méthacrylate, dans lequel la première quantité de composé acrylate est supérieure à la seconde quantité de composé acrylate, et dans lequel la première quantité de composé méthacrylate est inférieure à la seconde quantité de composé méthacrylate.

5. Appareil à jet d'encre pour appliquer des gouttelettes d'une composition d'encre durcissable par rayonnement sur un support d'enregistrement, l'appareil à jet d'encre comprenant :
**a.** une tête d'impression pour projeter des gouttelettes de la composition d'encre durcissable par rayonnement ;
**b.** des moyens d'alimentation en liquide pour alimenter la tête d'impression en composition d'encre durcissable par rayonnement ;
**c.** des moyens de maintien pour maintenir le support d'enregistrement au cours d'une opération d'impression ;
**d.** des moyens de durcissement pour durcir la composition d'encre durcissable par rayonnement ;
**e.** des moyens de récupération pour récupérer un niveau de brillant souhaité d'une image à imprimer ;
**f. caractérisé en ce que** l'appareil à jet d'encre comprend en outre des moyens de commande pour commander la tête d'impression, et une alimentation en encre en conformité avec le brillant souhaité et en conformité avec le procédé selon la revendication 1.
